(19) **Europäisches Patentamt European Patent Office Office européen des brevets**

(11) **EP 4 283 382 A1**

(12) **EUROPEAN PATENT APPLICATION**

(43) Date of publication:
**29.11.2023 Bulletin 2023/48**

(21) Application number: **22175797.4**

(22) Date of filing: **27.05.2022**

(51) International Patent Classification (IPC):
**G02C 7/02** $^{(2006.01)}$

(52) Cooperative Patent Classification (CPC):
**G02C 7/022; G02C 7/024;** G02C 2202/24

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Carl Zeiss Vision International GmbH 73430 Aalen (DE)**

(72) Inventors:
• **Buehren, Tobias 89073 Ulm (DE)**
• **Jester, Philipp 89520 Heidenheim (DE)**

(74) Representative: **Carl Zeiss AG - Patentabteilung Carl-Zeiss-Straße 22 73447 Oberkochen (DE)**

(54) **STILES-CRAWFORD-EFFECT BASED MECHANISM AND SPECTACLE LENS FOR RETINAL-REGION WEIGHTED PREVENTION OF MYOPIA PROGRESSION**

(57) The invention is directed to a spectacle lens (100 to 400, 800) comprising a ring-shaped structure, said ring-shaped structure (110, 210, 310, 410, 810) surrounding a ring-shaped clear zone (102, 202, 302, 402, 802) and said ring-shaped structure (110, 210, 310, 410, 810) being selected from one of:
(i) one focusing structure (105, 305, 405),
(ii) a plurality of focusing structures (103, 203, 304, 404),

(iii) a diffusing structure (806), and
- said ring-shaped clear zone (102, 202, 302, 402, 802) surrounding a central zone (101, 201, 301, 401, 801),
- said central zone (101, 201, 301, 401, 801) comprising a structure being selected from one of
(a) one focusing structure (105, 305, 405),
(b) a plurality of focusing structures (208),
(c) a diffusing structure (807).

Figure 2

**Description**

Field of the invention

The invention relates to a spectacle lens according to the preamble of claim 1 and claim 4.

Related art

B. A. Holden et al. reported in 2016 that myopia and high myopia estimates from 2000 to 2050 suggest significant increases in prevalence globally, including managing and preventing myopia related ocular complications and vision loss among almost 1 billion people with high myopia (B. A. Holden et al., Global Prevalence of Myopia and High Myopia and Temporal Trends from 2000 through 2050, Ophthalmology 2016;123:1036-1042). Therefore, the increase in the prevalence of myopia has become a major public health concern and a top priority in recent years (K. S. Duong, What's Driving the Myopia Epidemic, CRST Europe, https://crstodayeurope.com/articles/2020-jan/whats-driving-themyopia-epidemic/, latest accessed on 20.01.2022). Existing myopia can be corrected for example by using glasses, contact lenses, intraocular lenses or by refractive surgery. However, research shows that this corrects the refractive error only, but in many cases, especially in children, a rapid progression of the spherical power of the refractive error is reported. Further, interventions for controlling myopia onset and progression indicate that, efficacy at an individual level is quite variable and that no one treatment is 100% effective in all patients (C. F. Wildsoet et al., IMI - Interventions Myopia Institute: Interventions for Controlling Myopia Onset and Progression Report, Invest Ophthalmol Vis Sci. 2019;60(3):M106-M131).

The mechanisms of myopia development are still not fully understood. However, there is a general agreement that the basic risk factors for myopia can be divided broadly into the two classic categories, nature and nurture (Donald O. Mutti et al., Myopia The Nature Versus Nurture Debate Goes On, Investigative Ophthalmology & Visual Science, May 1996, Vol. 37, No. 6, 952-957).

It is generally agreed that when myopia develops during the period of ocular growth, the cause is an axial elongation of the eye that is not fully compensated by a reduction in the refracting power of the cornea or the lens, or both (T. Grosvenor and R. Scott, Comparison of Refractive Components in Youth-Onset and Early Adult-Onset Myopia, Optom Vis Sci. 1991, 68:204-209).

There is also evidence for an involvement of the choroid in refractive error development. Choroidal thickness decreases with age and severity of myopia (M. Ho et. al., Choroidal Thickness Measurement in Myopic Eyes by Enhanced Depth Optical Coherence Tomography, Ophthalmology 2013; 120:1909-1914).

Myopic children have significantly thinner choroids compared to nonmyopic children of similar age, particularly in central foveal regions. The magnitude of difference in choroidal thickness associated with myopia appears greater than would be predicted by a simple passive choroidal thinning with axial elongation (S. A. Read et. al., Choroidal Thickness in Myopic and Nonmyopic Children Assessed With Enhanced Depth Imaging Optical Coherence Tomography (Invest Vis Sci. 2013; 54:7578-7586).

J. Wallman et. al. had identified a choroidal mechanism that also contributes to the early phase of compensation for myopic defocus, whether produced by prior form-deprivation or by wearing positive lenses: choroidal thickness rapidly increases several-fold, thereby reducing vitreous chamber depth (J. Wallman et. al., Moving the Retina: Choroidal Modulation of Refractive State, Vision Res. Vol. 35, No. 1, pp. 37-50, 1995).

C. Wildsoet and J. Wallman showed that when hyperopic or myopic defocus is imposed on chick eyes by spectacle lenses, they rapidly compensate, becoming myopic or hyperopic respectively, by altering the depth of their vitreous chamber (C. Wildsoet and J. Wallman, Choroidal and Scleral Mechanisms of Compensation for Spectacle Lenses in Chicks, Vision Res. Vol. 35, No. 9, pp. 1175-1194, 1995). E. C. Woodman-Pieterse et. al. showed regional changes in choroidal thickness associated with accommodation and suggested that changes in choroidal thickness may reflect one of the early signals associated with changes in ocular growth and myopia development (E. C. Woodman-Pieterse et. al., Regional changes in choroidal thickness associated with accommodation, Invest Ophthalmol Vis Sci. 2015;56:6414-6422).

Research activities to reduce the progression of myopia has examined different modes of action of interventions and clinical trials have shown different effectiveness. In the case of spectacle lenses, the use of PALs slowed myopia progression, although the treatment effect was small (S. Hasebe et. al., Effect of Progressive Addition Lenses on Myopia Progression in Japanese Children: A Prospective, Randomized, Double-Masked, Crossover Trial, Investigative Ophthalmology & Visual Science, July 2008, Vol. 49, No. 7, 2781-2789).

The results of a clinical trial could not verify the therapeutic effect of spectacle lenses designed to reduce relative peripheral hyperopia for slowing down myopia progression in Japanese children (H. Kanda et al., Effect of spectacle lenses designed to reduce relative peripheral hyperopia on myopia progression in Japanese children: a 2-year multicenter randomized controlled trial, Japanese Journal of Ophthalmology https://doi.org/10.1007/s10384-018-0616-3).

A 2-year double-masked randomized controlled trial with daily wear of Defocus Incorporated Multiple Segments (DIMS) lenses significantly retarded myopia progression and axial elongation in myopic children. The results demonstrated simultaneous clear vision with constant myopic defocus can slow myopia progression (C. S. Y. Lam et. al. Defocus Incorporated Multiple Segments (DIMS) spectacle lenses slow myopia progression: a 2-year randomised clinical trial, Br J Ophthalmol. 2020; 104:363-368).

Spectacle lenses with Highly Aspherical Lenslet Target (H.A.L.T.) technology effectively slow myopia progression and axial elongation compared with single-vision spectacle lenses. Myopia control efficacy increased with lenslet asphericity. The efficacy of DIMS or H.A.L.T. is reported to be in the range of ortho-k treatment (J. Huang et. al., Efficacy Comparison of 16 Interventions for myopia control in children, Ophthalmology 2016;123:697-708), showing a mean difference of 0.15 mm of axial length growth p.a. for example for the H.A.L.T. lenses (J. Bao et. al., One-year myopia control efficacy of spectacle lenses with aspherical lenslets, Br J Ophthalmol. 2021; 0:1-6).

Using spectacle lenses for correcting exiting myopia, following mechanisms may be considered:

1. Under-accommodation or lag of accommodation
2. Peripheral blur
3. Simultaneous and alternating blur

whereby the mechanisms 2 and 3 are partly used in unison. The consideration according to the present invention is mainly focused on mechanism 3 as follows.

WO 2006/034652 A1 is directed to a method for treating progression of a refractive disorder in a human eye. Therefore, an artificial shift of the defocus equilibrium in the optical system of the eye is introduced for example by a spectacle lens. For normal vision a focused image is maintained near the macula, while together with a conventional correction the artificial shift introduces one or more defocused images into the optical system of the eye. A defocused image and a focused image is introduced simultaneously by a concentric Fresnel type bi-focal or multi-focal lens as shown in and described with respect to figures 4 to 6 of WO 2006/034652 A1. Alternatively, a defocused image is introduced at peripheral retina only while a focused image is kept at central retina by using a central-peripheral multi-focal lens as shown in and described with respect to figures 8a and 8b of WO 2006/034652 A1.

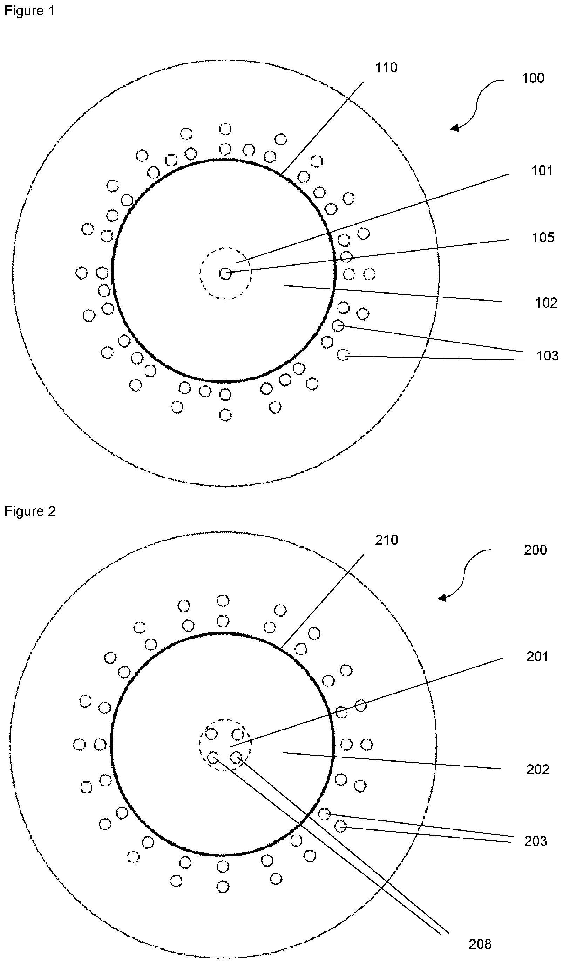

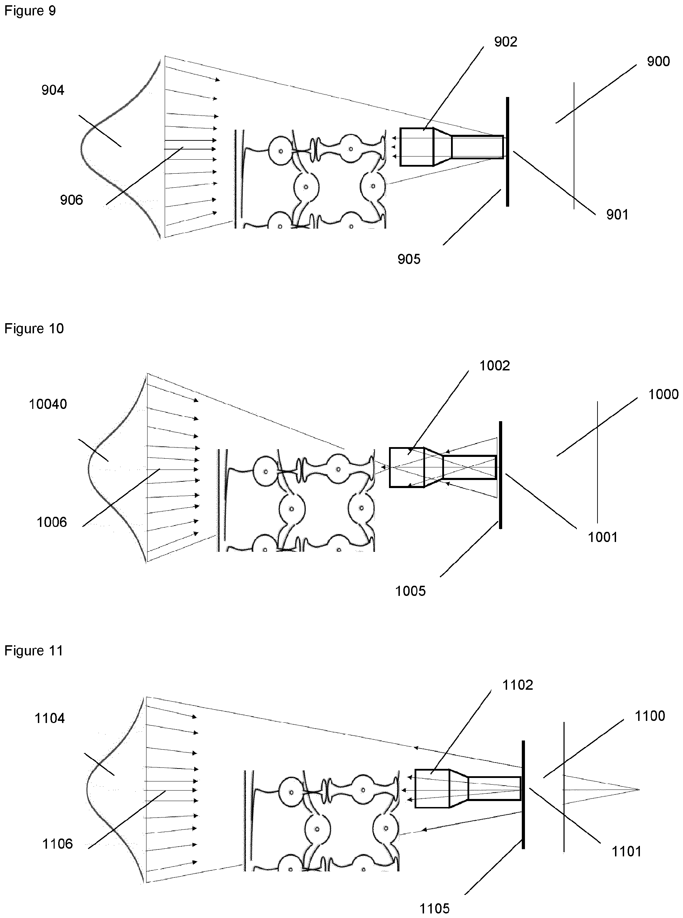

US 2017/0131567 A1 discloses a spectacle lens having a first refraction area based on a prescription of correcting the refraction of an eye and second refraction areas having a refractive power different from the first refractive power and having a function of focusing an image on a position other than a retina of the eye. The second refraction areas are formed as island-shaped areas on a surface of a spectacle lens, arranged as shown in figure 1 or figure 10, as hexagon within a circular area of a radius of 20 mm or less with an optical centre as a centre of the spectacle lens. In figure 1, the island-shaped areas are not arranged in a circular area of a radius of 2.5 to 10.0 mm with the optical centre of the spectacle lens as the centre. An island-shape area has a refractive power larger than the refractive power of the first refraction area by 2.00 D to 5.00 D.

US 2020/0393699 A1 discloses with respect to figure 11 a pair of glasses into the spectacle lenses which small bumps or depressions, translucent inclusions or transparent inclusions with a refractive index different form that of the spectacle lens material are introduced to blur images observed when wearing the pair of glasses.

Problem to be solved

Given the teaching of US 2017/0131567 A1, in particular figure 10, it is an object of the present invention to provide an apparatus being suitable for using the Stiles-Crawford-Effect in preventing myopia progression and simultaneously providing an acceptance for a use thereof.

The problem is solved by a spectacle lens according to claim 1 and alternatively according to claim 4. Advantageous embodiments of the invention are the subject-matter of the dependent claims.

Summary of the invention

The spectacle lens according to the invention comprises a ring-shaped structure, said ring-shaped structure surrounding a ring-shaped clear zone and said ring-shaped structure being selected from one of:

(i) one focusing structure,
(ii) a plurality of focusing structures,
(iii) a diffusing structure,

- said clear zone surrounding a central zone,
- said central zone comprising a structure being selected from one of

(a) one focusing structure,
(b) a plurality of focusing structures,
(c) a diffusing structure.

A spectacle lens or lens is according to ISO 13666:2019(E), section 3.5.2, an ophthalmic lens worn in front of, but not in contact with, the eyeball. An ophthalmic lens is according to ISO 13666:2019(E), section 3.5.1, a lens intended to be used for purposes of measurement, correction and/or protection of the eye, or for changing its appearance.

The term "ring-shaped" shall describe an imaginary line on a surface of a spectacle lens, said imaginary line having a path running from a starting point around (i) a zone or (ii) a structure ending up in the starting point.

A surface of a spectacle lens shall be a front surface or a back surface. The front surface is according to ISO 13666:2019(E), section 3.2.13, the surface of the lens intended to be fitted away from the eye. The back surface is according to ISO 13666:2019(E), section 3.2.14, the surface of the lens intended to be fitted nearer to the eye.

A structure shall be considered as "ring-shaped structure" if it surrounds a structure-free zone and there is a path within the structure which runs from a starting within the structure around the structure-free zone and to the starting point again.

The term "ring-shaped structures" shall apply to structures, preferably ring-shaped focusing structures, providing a ring-shaped focal line as well as to structures comprising a plurality of lenslets adjoining each other such, that they form a ring of contiguously connected lenslets and providing a plurality of (for example equidistantly arranged and preferably mainly line-shaped or point-shaped) foci along a ring-shaped line. A structure providing a ring-shaped focal line is for example shown in figures 14a and 14b and described in paragraph [0102] of EP 3 561 578 A1 as well as in figures 11a and 11b, page 20, lines 10 to 12 of WO 2019/166659 A1, respectively. Other variants of such structures providing a ring-shaped focal line are disclosed in figure 1 of CN 111103701 B, in figures 5A and 5B of US 2019/0227342 A1. In front view, i.e., if viewed perpendicular onto a front surface of a spectacle lens, the ring does not need to be circular, also non-circular, in particular elliptical or otherwise curved rings such as for example shown in figure 1 of CN 213659117 U are possible.

The term "ring-shaped structures" shall further apply to structures, preferably ring-shaped focusing structures, comprising a plurality of lenslets not adjoining each other but forming a ring of not contiguously connected lenslets with each lenslet providing a focus along a ring-shaped line. In such a ring-shaped structure comprising a plurality of lenslets not adjoining each other but forming a ring of not contiguously connected lenslets said ring of not contiguously connected lenslets corresponds to a ring of contiguously connected lenslets in which one or more lenslets is or are missing. One or more lenslets is or are missing may be for example the case when every second, every third, every fourth, etc. lenslet is missing.

A clear zone shall be considered as "ring-shaped clear zone" if it is surrounded by a structure and there is a path within the clear zone which runs from a starting within the clear zone around the structure and to the starting point again.

In case of a ring-shaped structure (a) providing a ring-shaped focal line or (b) comprising a plurality of lenslets adjoining each other such, that they form a ring of contiguously connected lenslets a clear zone shall be considered as ""ring-shaped clear zone" if it is surrounded by said structure (a) providing a ring-shaped focal line or (b) comprising a plurality of lenslets adjoining each other such, that they form a ring of contiguously connected lenslets and there is a path within the clear zone and along said structure which runs from a starting within the clear zone around said structure and along said structure and to the starting point again.

In case of a ring-shaped structure (c) comprising a plurality of lenslets not adjoining each other a clear zone shall be considered as "ring-shaped clear zone" if it is surrounded by said structure when the missing one or more lenslets would have been added and there is a path within the clear zone which runs from a starting within the clear zone around the added structure and to the starting point again.

The term "along a structure" shall mean that there is a path within one of

- an inner onset or the inner onsets of a structure which runs from a starting point within the inner onset(s) around the inner onset(s) and to the starting point again,
- an outer onset or the outer onsets of a structure which runs from a starting point within the outer onset(s) around the outer onset(s) and to the starting point again.

With respect to a ring-shaped clear zone the inner onsets or the inner onsets of the respective ring-shaped structure shall be considered.

The term "onset" shall represent a first measurable position of a structure on a surface of a spectacle lens. In case of a focusing structure the term "onset" represents a position on a surface of a spectacle lens in which a lens surface starts to deviate from a lens surface of said surface of the spectacle lens comprising the structure. Phrased differently, the term "onset" represents a position on a front surface or on a back surface of a spectacle lens in which the lens surface starts to deviate from the lens surface of said front surface or said back surface. In case of a diffusing structure, the term "onset" represents a position on a surface of a spectacle lens in which the contrast-reducing properties of the spectacle lens start to change. Further, the term "inner onset" specifies an onset on the side of the structure towards to an optical centre as defined in ISO 13666:2019(E), section 3.2.15, of the spectacle lens. The term "outer onset" specifies an onset on the side of the structure towards the periphery of the spectacle lens.

A lens surface of a spectacle lens, preferably the lens surface of the front surface or the back surface of the spectacle lens, is preferably classified as one selected of

- a spherical surface, as defined in ISO 13666:2019(E), section 3.4.1,
- a cylindrical surface, as defined in ISO 13666:2019(E), section 3.4.2,
- an aspherical surface, as defined in ISO 13666:2019(E), section 3.4.3,
- a toroidal surface, as defined in ISO 13666:2019(E), section 3.4.6,
- an atoroidal surface, as defined in ISO 13666:2019(E), section 3.4.7,
- a power-variation surface, as defined in ISO 13666:2019(E), section 3.4.10,
- a meridionally-compensated aspherical surface, as defined in ISO 13666:2019(E), section 3.4.11.

The term "clear zone" applies to a structure-free zone of a spectacle lens. It is designed such that it shall neither provide a myopic defocus nor a diffusion in foveal vision when a wearer looks through the clear zone with the spectacle lens being positioned according the specified as-worn position, the as-worn position or position of wear as defined in ISO 13666:2019(E), section 3.2.26. Furthermore, a clear zone may allow for achieving, if required assisted by accommodation, a focused image on the fovea.

In the context of the present invention, one focusing structure may be for example

- embodied in a Fresnel structure on a spectacle lens or as spectacle lens comprising a Fresnel structure, for example as a concentric Fresnel bi-focal or multi-focal spectacle lens as described in WO 2006/034652 A1, shown in WO 2006/034652 A1, figures 4a and 4b, and described in WO 2006/034652 A1, page 7, lines 4 to 12 with respect to figures 4a and 4b, and page 8, lines 5 to 9; or
- embodied in a central-peripheral multi-focal lens including concentric optical zones of two or more optical powers as described in WO 2006/034652 A1, shown in WO 20068034652 A1, figures 8a and 8b, and described in WO 2006/034652 A1, page 9, line 23 to page 10, line 2 and page 10, lines 3 to 9 with respect to figures 8a and 8b;
- selected from one of the focusing structures described in connection with a plurality of focusing structures.

In the context of the present invention, a plurality of focusing structures may be for example

- embodied in a plurality of lenslets, the plurality of lenslets for example described as island-shaped areas in US 2017/0131567 A1. A spectacle lens comprising a plurality of island-shaped areas is shown in plan view in US 2017/0131567 A1, figures 1, 2 and 10, in side view in figures 3 and 4 and described in US 2017/0131567 A1, paragraphs [0050], [0052], [0053] with respect to figures 1 and 2, in paragraph [0055] with respect to figure 10, and in paragraph [0051] with respect to figures 3 and 4. According to US 2017/0131567 A1, paragraph [0052] each island-shaped area has an area of about 0.50 to 3.14 mm$^2$, has a circular shape of 0.8 to 2.0 mm in diameter and the distance between island-shaped areas is diameter/2; or
- embodied in a plurality of ring-shaped structures, the plurality of ring-shaped structures for example described as cylindrical concentric rings in WO 2019/166657 A1. A plurality of cylindrical concentric rings is shown in plan view in WO 2019/166657 A1, figure 14b, and described in WO 2019/166657 A1, page 22, lines 17 to 19.

The term "lenslet" shall refer either to a small convex structure in the approximately spherical, ellipsoidal, sinusoidal or similar shape of a lens that is provided on a surface of a spectacle lens and has lateral dimensions that are several orders of magnitude smaller than the dimensions of the spectacle lens itself, or to a small area with a refractive index distribution that is provided in a spectacle lens material where the refractive index distribution has lateral dimensions that are at least a plurality of orders of magnitude smaller than the dimensions of the spectacle lens itself.

In case of the lenslets being small convex structures, lenslets are considered to adjoin each other in case there is a path between the centers of two lenslets that does not pass an area having solely the form / topography of the surface on which the lenslets are formed. In case of the lenslets being refractive index distributions, lenslets are considered to adjoin each other in case there is a path between the centers of two lenslets that does not pass an area having the refractive index of the spectacle lens material.

In the context of the present invention, a diffusing structure may be for example

- embodied in translucent inclusions or transparent inclusions with a refractive index different from the refractive index of the spectacle lens material; in particles smaller than the wavelength of the light transmitting the spectacle lens, said particles being incorporated in the spectacle lens material; or in opaque or semi-opaque light-absorbing particles as large or larger than the wavelength of light transmitted through the spectacle lens, said particles being incorporated in the spectacle lens material; each as described for example in US 2020/0393699 A1. A pair of glasses comprising spectacle lenses with translucent inclusions or transparent inclusions or particles is shown in US 2020/0393699 A1, figure 11, and described in US 2020/0393699 A1, page 5, paragraph [0041] to page 6, paragraph [0044] with respect to figure 11; or

- an optical element that is made of any material that diffuses or scatters light in some manner to transmit soft light. Diffuse light can be easily obtained by reflecting light from a white surface, while more compact diffusing structures may use translucent material, including ground glass, Teflon, holographs, opal glass, and greyed glass. Scattering may be achieved by scattering centers which may be point-shaped, examples of which are for example disclosed in WO 2010/075319 A2, WO 2018/026697 A1, WO 2019/152438 A1 and WO 2020/014613 A1, respectively.

Preferably, a spectacle lens comprising one or more of the before mentioned structures, said one or more structures are present on a same surface of the spectacle lens. Preferably, the spectacle lens comprises said one or more structures on the front surface or on the back surface thereof, further preferably on the front surface. Alternatively, some of the before mentioned structures are present on the front surface of the spectacle lens and some of them are present on the back surface of the spectacle lens.

The above-described problem is fully solved by a spectacle lens described in the forgoing. Since the intended wearers are preferably children, the acceptance and wearability prevent the children from removing the spectacle lenses.

Further, a spectacle lens described in the forgoing supports the inventor's findings with respect to a retinal image mediated ocular growth mechanism by which individual photoreceptors (figure 9, figure 10, figure 11, 902, 1002, 1102) generate elicited visual signals (904, 1004, 1104), i.e., maximum visual signal (904) corresponds with maximum image contrast, from a local region of the pupil via the Stiles-Crawford-Effect, thereby, the only angle of incident of a bundle of light rays (906, 1006, 1106) entering a local region of the pupil, which will be aligned to the photoreceptor axis is a bundle of light rays (906) that has its focal point (901) on the retinal pigment epithelium (905), as possible alternative myopia progression and prevention mechanisms of action, taking into consideration the following:
A reduced visual signal (1004, 1104) is elicited by individual photoreceptors (1002, 1102) when the focal points (1001,1101) are in front or behind the retinal pigment epithelium (1005, 1105). Contrast improvement by individual photoreceptors (1002, 1102) is achieved via local choroidal thinning (1100) or thickening (1000) thereby detecting the sign of defocus on an individual photoreceptor (902, 1002, 1102) basis and maximizing elicited signals.

The Stiles-Crawford-Effect describes the apparent difference in brightness when a ray of light travels through the open pupil. The apparent brightness of an object is not proportional to the pupil area because the rays entering the pupil at points distant from the axis are not so effective visually as rays entering along or near to the axis (W. S. Stiles and B. H. Crawford, The Luminous Efficiency of Rays Entering the Eye Pupil at Different Points, Proceedings of the Royal Society of London. Series B, Containing Papers of a Biological Character, Vol. 112, No. 778, (M ar. 2, 1933), pp. 428-450). Closely related to this is the directionality of photoreceptors in the human eye. If the cones are pointing toward the center of the pupil, light entering through the center of the pupil (or equivalently, entering the cones along their axis) is perceived as brighter than the same light coming from the edge of the pupil (i.e. at a larger angle). The cone directionality can be measured by psychophysical or reflectometric methods (S. Marcos and S. A. Bums, Cone Spacing and Waveguide Properties from Cone Directionality Measurements, J Opt Soc Am A Opt Image Sci Vis. 1999 May; 16(5): 995-1004). A. Roorda and D. R. Williams found that the lack of disarray in pointing direction in the cone photoreceptor array implies that any objective measurement of the tuning function of the cones in normal retina, whether it involves one, hundreds, or thousands of cones, will be almost identical to the effective tuning function of a single cone (A. Roorda and D. R. Williams, Optical fiber properties of individual human cones, Journal of Vision (2002) 2, 404-412).

Although there are discrepancies between directionality factors derived from different methods (J. M. Gorrand, The directionality of photoreceptors in the human retina, Bull. Soc. beige Ophtalmol., 302, 215-229, 2006) the effect the directional properties of cones have in minimizing the capture of stray light and produce a pupil apodisation, was found to have little influence on either the PSF (point spread function) or the MTF (modulation transfer function), with the maximum effect for the MTF and 6 mm pupils amounting to 0.2log unit (D. A. Atchison and D. H. Scott, Contrast sensitivity and the Stiles-Crawford-Effect, Vision Research 42 (2002) 1559-1569).

It is furthermore believed that photoreceptor alignment is governed by a phototropic mechanism that actively orients their axis toward the entrance pupil of the eye. Certain unspecified local changes occur within the myoid of the photoreceptor that are appropriate to activate molecular motors and induce local movements by cytoskeletal elements (microtubules and microfilaments) (J. M. Gorrand, The directionality of photoreceptors in the human retina, Bull. Soc. beige Ophtalmol., 302, 215-229, 2006).

The elicited signal (904), from a bundle of light rays of a local region of the pupil aligned with cone directionality will be reduced (1004, 1104) if the reflection from the retinal pigment epithelium (RPE) is not aligned with cone directionality or not focused on the RPE due to the Stiles-Crawford-Effect. All other elicited visual signal coming from light rays of local regions of the pupil at an angle of incident to the photoreceptor axis will also create reduced responses due to the Stiles-Crawford-Effect. Therefore, for any given object distance and 3-dimensional object space, by means of accommodation, local elicited visual signals of photoreceptors may be maximized. Thereby, the sum of visual signals may be weighted depending on photoreceptor density and signal transfer capacity per region.

Thereby the sum of elicited signal reductions (1004, 1104) i.e., the sum from individual photoreceptors is given by:

$$\sum P_{norm} = \sum_{P=1}^{n} P_n * f(central\ zone) + \sum_{P=1}^{m} P_m * f(peripheral\ zone)$$

where:

Pnorm = normalized elicited visual signal per photoreceptor
$P_n$ = photoreceptor weighted in a central zone by central zone signal function
$P_m$ = photoreceptor weighted by peripheral zone by peripheral zone signal function
with:

$$P_{n\ \&\ m} = \frac{P_{elicited}}{P_{max}}$$

and:

$$P_{elicited} = \frac{1}{\sqrt{2\pi}} * e^{-\frac{1}{2}*x^2}, \quad P_{max} = \frac{1}{\sqrt{2\pi}}$$

where:
x = blur circle of relevant bundle of light coming from a local region of the pupil, which is aligned or not aligned with cone directionality.

In a preferred embodiment of the invention, the spectacle lens is characterized by having the ring-shaped clear zone comprising an optical centre as defined in ISO 13666:2019(E), section 3.2.15. The optical centre is according to ISO 13666:2019(E), section 3.2.15, the intersection of the optical axis (3.1.8) with the front surface (3.2.13) of a lens (3.5.2).

The optical centre of a single-vision lens, the single-vision lens as defined in ISO 13666:2019(E), section 3.7.1, is positioned within the ring-shaped clear zone.

A progressive-power lens (PPL) or progressive-addition lens (PAL) or varifocal lens, the PPL, PAL, or varifocal lens as defined in ISO 13666:2019(E), section 3.7.8, may comprise more than one ring-shaped clear zones, preferably two ring-shaped clear zones, preferably positioned in distance portion as defined in ISO 13666:2019(E), section 3.15.1 and in near portion as defined in ISO 13666:2019(E), section 3.15.3.

In a ring-shaped clear zone comprising an optical centre, the optical centre may be either

- a centre of the ring-shaped clear zone, or
- not a centre of the ring-shaped clear zone, i.e., the optical centre may be positioned anywhere within the ring-shaped clear zone.

The centre may be a circle centre of a centroid of a respective area within the ring-shaped clear zone.

In another preferred embodiment of the invention, the spectacle lens is characterized by having the rang-shaped clear zone a clear zone width within at least one range of the following group of ranges:

(A) a clear zone width of 1.3 mm to 9.0 mm,
(B) a clear zone width of 2.0 mm to 8.5 mm,
(C) a clear zone width of 2.6 mm to 8.0 mm,
(D) a clear zone width of 3.5 mm to 7.5 mm.

The term "clear zone width" shall designate a largest dimension or a largest expansion of the ring-shaped clear zone when viewed from above and projected in a plane. The largest dimension or the largest expansion preferably is designated by the most distant inner onset positions of the innermost structures surrounding the ring-shaped clear zone.

In case the ring-shaped clear zone is circular, the clear zone width is the diameter. The diameter preferably is designated by the most distant inner onset positions of the innermost structures surrounding the circular clear zone. The diameter is within at least one range of the before mentioned ranges.

In another preferred embodiment of the invention, the spectacle lens is characterized by having the central zone comprising an optical centre as defined in ISO 13666:2019(E), section 3.2.15.

The optical centre of a single-vision lens is positioned within the central zone.

A progressive-power lens (PPL) or progressive-addition lens (PAL) or varifocal lens may comprise more than one central zones, preferably two central zones, preferably positioned in distance portion and in near portion.

In a central zone comprising an optical centre, the optical centre may be either

- a centre of the central zone, or
- not a centre of the central zone, i.e., the optical centre may be positioned anywhere within the central zone.

The centre may be a circle centre or a centroid of a respective area within the central zone.

The optical centre may be

- the centre of the central zone and the centre of the ring-shaped clear zone, or
- the centre of the central zone but not the centre of the ring-shaped clear zone, or
- not the centre of the central zone but the centre of the ring-shaped clear zone.

In another preferred embodiment of the invention, the spectacle lens is characterized by having the central zone a central zone width within at least one range of the following group of ranges:

(A) a central zone width of 0.5 mm to 4.5 mm,
(B) a central zone width of 0.9 mm to 4.0 mm,
(C) a central zone width of 1.0 mm to 3.5 mm,
(D) a central zone width of 1.2 mm to 3.0 mm.

The term "central zone width" shall designate a largest dimension or a largest expansion of the central zone when viewed from above and projected in a plane. The largest dimension or the largest expansion preferably is designated by the most distant outer onset positions of the outermost structures of the central zone.

In case the central zone is circular, the central zone width is the diameter. The diameter preferably is designated by the most distant outer onset positions of the outermost structures of the circular central zone. The diameter is within at least one range of the before mentioned ranges.

In another preferred embodiment of the invention, the spectacle lens is characterized by having the central zone circular.

In another preferred embodiment of the invention, the spectacle lens is characterized by having a central zone fill factor defined as a surface area ratio of a surface area of one of

(a) one focusing structure of said central zone,
(b) a plurality of focusing structures of said central zone,
(c) a diffusing structure of said central zone,

and the sum of

(a) said one focusing structure,
(b) said plurality of focusing structures,
(c) said diffusing structure

and the surface area of the central zone within at least one range of the following group of ranges:

(A) a central zone fill factor of 5% to 100%;
(B) a central zone fill factor of 10% to 90%;
(C) a central zone fill factor of 15% to 85%;
(D) a central zone fill factor of 20% to 80%.

In another preferred embodiment of the invention, the spectacle lens is characterized by the

- one focusing structure being in the optical centre or the
- one diffusing structure is in the optical centre.

In another preferred embodiment of the invention, the spectacle lens is characterized by the

a) focusing structure, or
b) plurality of focusing structures

each comprised in the central zone provides an additional power as compared to the ring-shaped clear zone surrounding said central zone within at least one range of the following group of ranges:

(i) said additional power is larger than 1 diopter and equal or lower than 12 diopter;
(ii) said additional power is larger than 2.5 diopter and equal or lower than 11 diopter;
(iii) said additional power is larger than 3 diopter and equal or lower than 10 diopter;
(iv) said additional power is larger than 4.5 diopter and equal or lower than 9 diopter;
(v) said additional power is larger than 5 diopter and equal or lower than 8 diopter;
(vi) said additional power is larger than 5.5 diopter and equal or lower than 7 diopter.

The term "additional power" applies to a focal power that is added to the focal power, the focal power defined in EN ISO 13666(E), section 3.10.2, of a spectacle lens in at least one meridian, where the focal power of a spectacle lens provides, assisted by accommodation, a focused image on the fovea and the additional power, when added to the focal power of a spectacle lens, provides for a myopic defocus. The additional power must not be confused with the addition power of a progressive-power lens.

A plurality of focusing structures comprised in said central zone may provide (a) an identical additional power as compared to the ring-shaped clear zone surrounding said central zone or (b) one or more focusing structures of said plurality of focusing structures may provide a different additional power than other focusing structures of said plurality of focusing structures. However, the additional power provided shall be in and selected from the before-mentioned ranges.

A focusing structure or a plurality of focusing structures comprised in said central zone may provide an additional power identical to or different from an additional power provided by the ring-shaped structure for example. The additional power provided by the ring-shaped structure preferably is also in and selected from the before-mentioned ranges.

A spectacle lens according to the above-described preferred embodiments is intended to satisfy especially a child's acceptance and wearability to prevent the children from removing the spectacle lenses.

In an alternative embodiment of the invention the spectacle lens comprises a central zone, said central zone comprising a structure, said structure being selected from one of:

(i) one focusing structure,
(ii) a plurality of focusing structures,
(iii) a diffusing structure,

said central zone having a central zone width within at least one of the following ranges:

(A) a central zone width of 0.5 mm to 5.0 mm,
(B) a central zone width of 0.9 mm to 4.5 mm,
(C) a central zone width of 1.0 mm to 4.0 mm,
(D) a central zone width of 1.2 mm to 3.5 mm.

The definitions given before shall apply.

The above-described problem is fully solved by a spectacle lens described in the forgoing alternative embodiment. Since the intended wearers are preferably children, the acceptance and wearability prevent the children from removing the spectacle lenses.

In another alternative embodiment of the invention, the spectacle lens is characterized by the

a) focusing structure, or
b) plurality of focusing structures

each comprised in the central zone provides an additional power as compared to a lens surface surrounding said central zone within at least one range of the following group of ranges:

(i) said additional power is larger than 1 diopter and equal or lower than 12 diopter;
(ii) said additional power is larger than 2.5 diopter and equal or lower than 11 diopter;
(iii) said additional power is larger than 3 diopter and equal or lower than 10 diopter;
(iv) said additional power is larger than 4.5 diopter and equal or lower than 9 diopter;
(v) said additional power is larger than 5 diopter and equal or lower than 8 diopter;
(vi) said additional power is larger than 5.5 diopter and equal or lower than 7 diopter.

The definitions given before shall apply.

The spectacle lens according to the present invention may be in the form of computer-readable instructions for the production thereof stored on a computer-readable data carrier.

The spectacle lens being designed according to the inventive principle may also be realized in the form of computer-readable data stored on a computer-readable data carrier.

The spectacle lens according to the present invention may be in the form of computer-readable instructions for the production thereof transformed into a data carrier signal.

The spectacle lens being designed according to the inventive principle may also be realized in the form of a data carrier signal.

The spectacle lens according to the present invention may be in the form of a numerical data set.

The spectacle lens according to the present invention may be in the form of a data signal transferring a numerical data set.

The spectacle lens according to the present invention may be in the form of a data carrier storing a numerical data set.

The computer-implemented method according to the invention for designing a spectacle lens for the purpose of a use of the design for a manufacture of a spectacle lens, the spectacle lens comprising a ring-shaped structure, said ring-shaped structure surrounding a ring-shaped clear zone and said ring-shaped structure being selected from one of:

(i) one focusing structure,
(ii) a plurality of focusing structures,
(iii) a diffusing structure,

comprises

- designing said ring-shaped clear zone to surround a central zone,
- designing said central zone to comprise a structure being selected from one of

(a) one focusing structure,
(b) a plurality of focusing structures,
(c) a diffusing structure.

In a preferred embodiment the computer-implemented method comprises

- to calculate a power ratio effect by a surface fill factor multiplied by an additional power of said structure of said central zone (101, 201, 301, 401, 801), said surface fill factor being an area of a lens surface divided by an area of said structure, and
- to weight said power ratio effect of a peripheral zone is weighted by at least one of

  ○ $34295x^{-0,986}$
  ○ $48790x^{-1,15}$
  ○ $171460x^{-1,64}$

each with x being a radius of more than 1 mm around an optical centre as defined in ISO 13666:2019(E), section 3.2.15.

In another preferred embodiment of the invention the computer-implemented method alternatively or additionally comprises

- to weight the power ratio effect in a central zone by at least one of

  ○ $-43802\ln(x) + 74817$
  ○ $-42215\ln(x) + 49660$
  ○ $-40627\ln(x) + 24502$

each with x being a radius of 1 mm or less around an optical centre as defined in ISO 13666:2019(E), section 3.2.15.

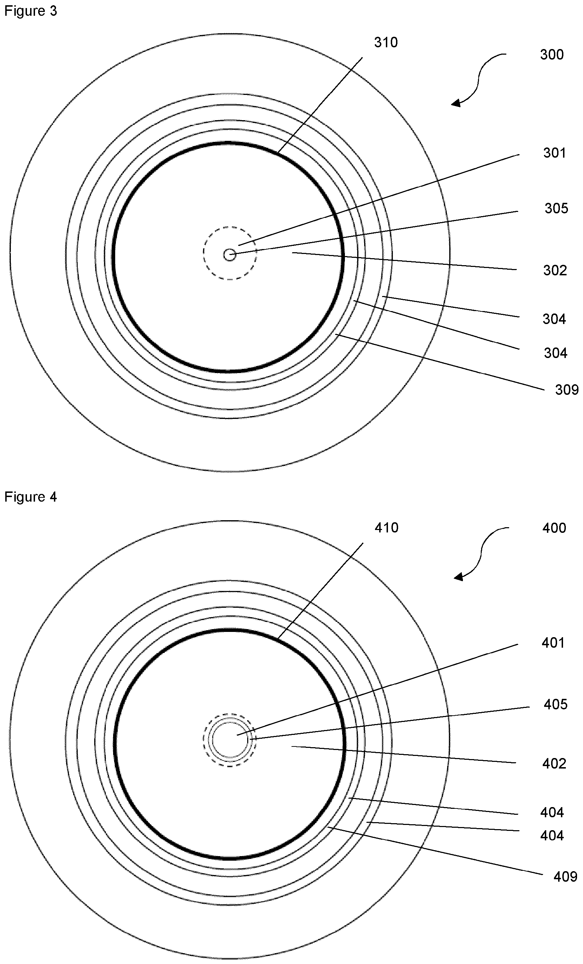

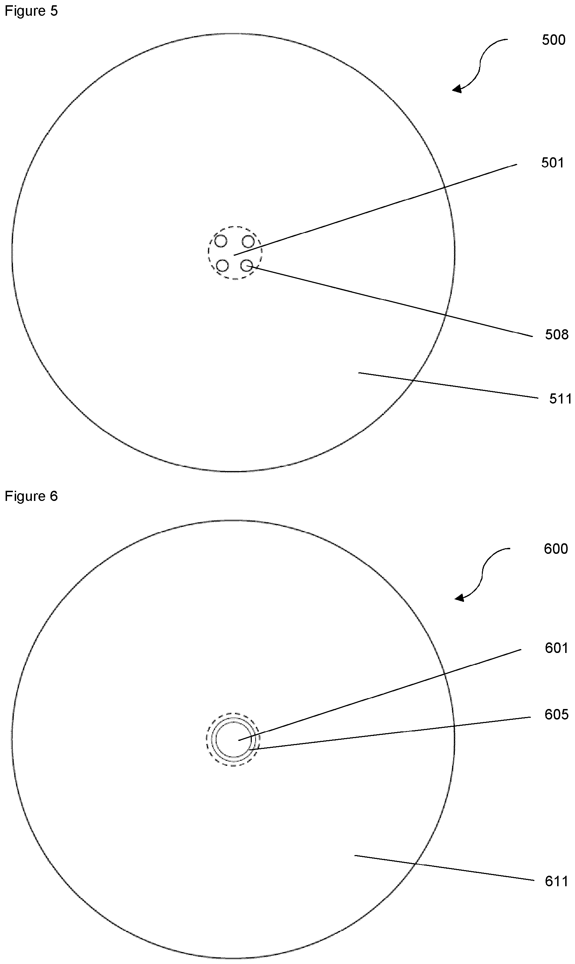

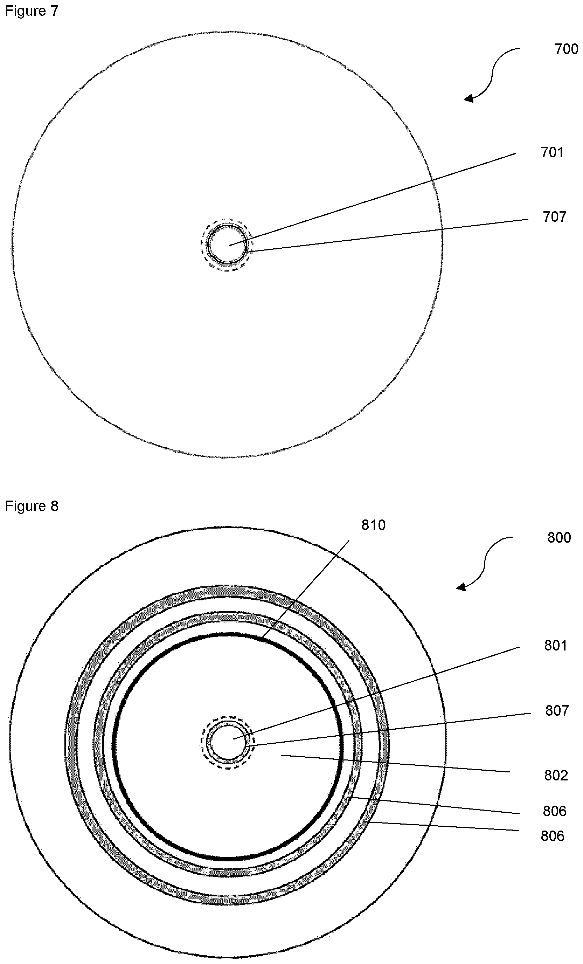

The invention will be described exemplarily with reference to figures 1 to 8.

Figures 1, 3 and 4 show a single-vision lens with one focusing structure in a central zone.
Figures 2, 5 and 6 show a single-vision lens with a plurality of focusing structures in a central zone.
Figures 7 and 8 show a single-vision lens with a diffusing structure in a central zone.

**Claims**

1. Spectacle lens (100 to 400, 800) comprising a ring-shaped structure, said ring-shaped structure (110, 210, 310, 410, 810) surrounding a ring-shaped clear zone (102, 202, 302, 402, 802) and said ring-shaped structure (110, 210, 310, 410, 810) being selected from one of:

   (i) one focusing structure (309, 409),
   (ii) a plurality of focusing structures (103, 203, 304, 404),
   (iii) a diffusing structure (806),

   **characterized in that**

   - said ring-shaped clear zone (102, 202, 302, 402, 802) surrounding a central zone (101, 201, 301, 401, 801),
   - said central zone (101, 201, 301, 401, 801) comprising a structure being selected from one of

     (a) one focusing structure (105, 305, 405),
     (b) a plurality of focusing structures (208),
     (c) a diffusing structure (807).

2. Spectacle lens (100 to 400, 800) according to claim 1, **characterized in that** said ring-shaped clear zone (102, 202, 302, 402, 802) comprises an optical centre as defined in ISO 13666:2019(E), section 3.2.15.

3. Spectacle lens (100 to 400, 800) according to one of the preceding claims 1 or 2, **characterized in that** said clear zone has a ring-shaped clear zone width within at least one range of the following group of ranges:

   (A) a ring-shaped clear zone width of 1.3 mm to 9.0 mm,
   (B) a ring-shaped clear zone width of 2.0 mm to 8.5 mm,
   (C) a ring-shaped clear zone width of 2.6 mm to 8.0 mm,
   (D) a ring-shaped clear zone width of 3.5 mm to 7.5 mm.

4. Spectacle lens (500 to 700) comprising a central zone, said central zone (501, 601, 701) comprising a structure, said structure being selected from one of:

   (i) one focusing structure (605),
   (ii) a plurality of focusing structures (508),
   (iii) a diffusing structure (707),

   **characterized in that** said central zone (501, 601, 701) having a central zone width within at least one of the following ranges:

   (A) a central zone width of 0.5 mm to 5.0 mm,
   (B) a central zone width of 0.9 mm to 4.5 mm,
   (C) a central zone width of 1.0 mm to 4.0 mm,
   (D) a central zone width of 1.2 mm to 3.5 mm.

5. Spectacle lens (100 to 400, 800, 500 to 700) according to one of the preceding claims, **characterized in that** said central zone (101, 201, 301, 401, 801, 501, 601, 701) comprises an optical centre as defined in ISO 13666:2019(E), section 3.2.15.

6. Spectacle lens (100 to 400, 800) according to one of the preceding claims 1 to 3, or 5, **characterized in that** said central zone (101, 201, 301, 401, 801, 501, 601, 701) has a central zone width within at least one range of the following group of ranges:

(A) a central zone width of 0.5 mm to 4.5 mm,
(B) a central zone width of 0.9 mm to 4.0 mm,
(C) a central zone width of 1.0 mm to 3.5 mm,
(D) a central zone width of 1.2 mm to 3.0 mm.

7. Spectacle lens (100 to 400, 800, 500 to 700) according to one of the preceding claims, **characterized in that** said central zone (101, 201, 301, 401, 801, 501, 601, 701) is circular.

8. Spectacle lens (100 to 400, 800, 500 to 700) according to one of the preceding claims, **characterized in that** said central zone (101, 201, 301, 401, 801, 501, 601, 701) has a central zone fill factor defined as a surface area ratio of a surface area of one of

(a) one focusing structure (309, 409) of said central zone (101, 201, 301, 401, 801, 501, 601, 701),
(b) a plurality of focusing structures (103, 203, 304, 404, 508) of said central zone (101, 201, 301, 401, 801, 501, 601, 701),
(c) a diffusing structure (807, 707) of said central zone (101, 201, 301, 401, 801, 501, 601, 701),

and the sum of

(d) said one focusing structure (309, 409),
(e) said plurality of focusing structures (103, 203, 304, 404, 508),
(f) said diffusing structure (807, 707)

and the surface area of the central zone (101, 201, 301, 401, 801, 501, 601, 701) within at least one range of the following group of ranges:

(E) a central zone fill factor of 5% to 100%;
(F) a central zone fill factor of 10% to 90%;
(G) a central zone fill factor of 15% to 85%;
(H) a central zone fill factor of 20% to 80%.

9. Spectacle lens (100 to 400, 800, 500 to 700) according to one of the preceding claims, **characterized in that**

- one focusing structure is in the optical centre or
- one diffusing structure is in the optical centre.

10. Spectacle lens (100 to 400, 500, 600) according to one of the preceding claims, **characterized in that**

a) said one focusing structure (105, 305, 405, 605), or
b) said plurality of focusing structures (208, 508)

of said central zone (101, 201, 301, 401, 501, 601) provides an additional power

- as compared to said ring-shaped clear zone (102, 202, 302, 402) surrounding said central zone (101, 201, 301, 401, 501, 601),
- as compared to a lens surface surrounding said central zone (511, 611),

each within at least one range of the following group of ranges:

(i) said additional power is larger than 1 diopter and equal or lower than 12 diopter;
(ii) said additional power is larger than 2.5 diopter and equal or lower than 11 diopter;
(iii) said additional power is larger than 3 diopter and equal or lower than 10 diopter;
(iv) said additional power is larger than 4.5 diopter and equal or lower than 9 diopter;
(v) said additional power is larger than 5 diopter and equal or lower than 8 diopter;
(vi) said additional power is larger than 5.5 diopter and equal or lower than 7 diopter.

11. Spectacle lens (100 to 400, 800, 500 to 700) according to one of the preceding claims in at least one form of the following group of forms:

> - in the form of computer-readable instructions for the production thereof stored on a computer-readable data carrier;
> - in the form of computer-readable data stored on a computer-readable data carrier;
> - in the form of computer-readable instructions for the production thereof transformed into a data carrier signal;
> - in the form of a data carrier signal.

12. Numerical data set describing a spectacle lens (100 to 400, 800, 500 to 700) according to claims 1 to 10.

13. Numerical data set according to claim 12 transferred via a data signal or stored on a data carrier.

14. Computer-implemented method for designing a spectacle lens (100 to 400, 800) for the purpose of a use of the design for a manufacture of a spectacle lens, the spectacle lens comprising a ring-shaped structure (110, 210, 310, 410, 810), said ring-shaped structure surrounding a ring-shaped clear zone (102, 202, 302, 402, 802) and said ring-shaped structure (110, 210, 310, 410, 810) being selected from one of:

> (i) one focusing structure (309, 409),
> (ii) a plurality of focusing structures (103, 203, 304, 404),
> (iii) a diffusing structure (807),

**characterized in that**

> - designing said ring-shaped clear zone (102, 202, 302, 402, 802) to surround a central zone (101, 201, 301, 401, 801),
> - designing said central zone (101, 201, 301, 401, 801) to comprise a structure being selected from one of
>
> > (a) one focusing structure (105, 305, 405),
> > (b) a plurality of focusing structures (208),
> > (c) a diffusing structure (807).

15. Method according to claim 14, **characterized in that**

> - a power ratio effect is calculated by a surface fill factor multiplied by an additional power of said structure of said central zone (101, 201, 301, 401, 801), said surface fill factor being an area of a lens surface divided by an area of said structure, and
> - said power ratio effect of a peripheral zone is weighted by at least one of
>
> > ∘ $34295x^{-0,986}$
> > ∘ $48790x^{-1,15}$
> > ∘ $171460x^{-1,64}$

each with x being the radius of more than 1 mm around an optical centre as defined in ISO13666:2019(E), section 3.2.15.

Figure 1

Figure 2

Figure 3

310

300

301

305

302

304

304

309

Figure 4

410

400

401

405

402

404

404

409

Figure 5

Figure 6

Figure 7

700

701

707

Figure 8

810

800

801

807

802

806

806

Figure 9

Figure 10

Figure 11

Europäisches
Patentamt

European
Patent Office

Office européen
des brevets

# EUROPEAN SEARCH REPORT

Application Number

EP 22 17 5797

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 3 561 578 A1 (ESSILOR INT [FR]) 30 October 2019 (2019-10-30) | 1-7,9-14 | INV. G02C7/02 |
| Y | * paragraphs [0022], [0096], [0100] – [0102], [0133], [0185], [0208]; figures 12, 13, 14b; table 1 * | 2,5,8 | |
| A,D | US 10 901 237 B2 (JOHNSON & JOHNSON VISION CARE [US]) 26 January 2021 (2021-01-26) * figure 7 * * column 11, line 19 – line 24 * * column 13, line 33 – column 14, line 18 * | 1-15 | |
| Y | WO 2020/261213 A1 (BRIEN HOLDEN VISION INSTITUTE LTD [AU]) 30 December 2020 (2020-12-30) | 2,5,8 | |
| A | * figures 2, 6g * * paragraphs [0002], [00108], [00115], [00117], [00121], [00125], [00129] * * paragraphs [00138], [00147] * | 1,3,4,6, 7,9-15 | |
| A,D | US 2022/082858 A1 (GUILLOT MATTHIEU [FR] ET AL) 17 March 2022 (2022-03-17) * paragraphs [0081], [0143] – [0147], [0180] – [0185]; figures 1, 8 * | 1-15 | TECHNICAL FIELDS SEARCHED (IPC)  G02C |
| A | US 9 625 739 B2 (JOHNSON & JOHNSON VISION CARE [US]) 18 April 2017 (2017-04-18) * column 3, line 51 – column 4, line 9 * | 1-15 | |

The present search report has been drawn up for all claims

| Place of search | Date of completion of the search | Examiner |
|---|---|---|
| Munich | 22 November 2022 | Vazquez Martinez, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

**EP 22 17 5797**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

20

Europäisches
Patentamt

European
Patent Office

Office européen
des brevets

**LACK OF UNITY OF INVENTION
SHEET B**

Application Number

**EP 22 17 5797**

The Search Division considers that the present European patent application does not comply with the requirements of unity of invention and relates to several inventions or groups of inventions, namely:

    1. claims: 1, 3, 4, 6, 7, 11-14

        Spectacle lens for myopia prevention: features of peripheral
        ring-shaped structures and features of central zone

    1.1. claims: 1, 3, 11-14

        Spatial arrangement of peripheral optical structures

    1.2. claims: 4, 6, 7

        Modification of the area of central retina subject to the
        optical signals to prevent myopia progression
        ---

    2. claims: 2, 5, 9

        Spectacle lens for myopia prevention: shift at retinal level
        of the optical signals generated by the optical structures
        of the spectacle lens
        ---

    3. claims: 8, 10, 15

        Spectacle lens for myopia prevention: optimization of the
        optical profile of the signal to prevent myopia progression
        at the central retina
        ---

Please note that all inventions mentioned under item 1, although not
necessarily linked by a common inventive concept, could be searched
without effort justifying an additional fee.

## ANNEX TO THE EUROPEAN SEARCH REPORT
## ON EUROPEAN PATENT APPLICATION NO.

EP 22 17 5797

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2022

| Patent document cited in search report | | | Publication date | Patent family member(s) | | Publication date |
|---|---|---|---|---|---|---|
| EP 3561578 | A1 | | 30-10-2019 | NONE | | |
| US 10901237 | B2 | | 26-01-2021 | AU | 2019200257 A1 | 08-08-2019 |
| | | | | BR | 102019001147 A2 | 06-08-2019 |
| | | | | CA | 3030725 A1 | 22-07-2019 |
| | | | | CN | 110068937 A | 30-07-2019 |
| | | | | CN | 112904591 A | 04-06-2021 |
| | | | | EP | 3514613 A1 | 24-07-2019 |
| | | | | EP | 3667402 A1 | 17-06-2020 |
| | | | | IL | 264260 A | 30-05-2019 |
| | | | | JP | 2019128599 A | 01-08-2019 |
| | | | | KR | 20190089752 A | 31-07-2019 |
| | | | | PH | 12019000026 A1 | 14-08-2019 |
| | | | | RU | 2019100705 A | 15-07-2020 |
| | | | | SG | 10201900466V A | 27-08-2019 |
| | | | | SG | 10202012980Q A | 25-02-2021 |
| | | | | SG | 10202012982U A | 25-02-2021 |
| | | | | SG | 10202108892R A | 29-09-2021 |
| | | | | TW | 201940135 A | 16-10-2019 |
| | | | | US | 2019227342 A1 | 25-07-2019 |
| WO 2020261213 | A1 | | 30-12-2020 | AU | 2020307664 A1 | 27-01-2022 |
| | | | | BR | 112021026412 A2 | 12-04-2022 |
| | | | | CA | 3144870 A1 | 30-12-2020 |
| | | | | CN | 114286963 A | 05-04-2022 |
| | | | | EP | 3990977 A1 | 04-05-2022 |
| | | | | JP | 2022539018 A | 07-09-2022 |
| | | | | KR | 20220027213 A | 07-03-2022 |
| | | | | TW | 202109143 A | 01-03-2021 |
| | | | | US | 2022350169 A1 | 03-11-2022 |
| | | | | WO | 2020261213 A1 | 30-12-2020 |
| US 2022082858 | A1 | | 17-03-2022 | BR | 112020017188 A2 | 22-12-2020 |
| | | | | BR | 112020017312 A2 | 15-12-2020 |
| | | | | BR | 112020017510 A2 | 22-12-2020 |
| | | | | BR | 112020017525 A2 | 22-12-2020 |
| | | | | BR | 112020017586 A2 | 22-12-2020 |
| | | | | CA | 3092418 A1 | 06-09-2019 |
| | | | | CA | 3092428 A1 | 06-09-2019 |
| | | | | CA | 3092605 A1 | 06-09-2019 |
| | | | | CA | 3092607 A1 | 06-09-2019 |
| | | | | CA | 3092609 A1 | 06-09-2019 |
| | | | | CA | 3155413 A1 | 06-09-2019 |
| | | | | CN | 111095082 A | 01-05-2020 |
| | | | | CN | 111095083 A | 01-05-2020 |
| | | | | CN | 111095084 A | 01-05-2020 |

EPO FORM P0459

For more details about this annex : see Official Journal of the European Patent Office, No. 12/82

**page 1 of 3**

## ANNEX TO THE EUROPEAN SEARCH REPORT
## ON EUROPEAN PATENT APPLICATION NO.

EP 22 17 5797

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2022

| Patent document cited in search report | Publication date | Patent family member(s) | Publication date |
|---|---|---|---|
| | | CN    111226161 A | 02-06-2020 |
| | | CN    113960808 A | 21-01-2022 |
| | | CN    113960809 A | 21-01-2022 |
| | | CN    114545660 A | 27-05-2022 |
| | | CN    114660687 A | 24-06-2022 |
| | | CN    213122475 U | 04-05-2021 |
| | | CN    216310444 U | 15-04-2022 |
| | | CN    216561273 U | 17-05-2022 |
| | | CN    216561274 U | 17-05-2022 |
| | | CN    217085443 U | 29-07-2022 |
| | | CN    217689666 U | 28-10-2022 |
| | | CO    2020010242 A2 | 29-01-2021 |
| | | CO    2020010432 A2 | 18-01-2021 |
| | | CO    2020010439 A2 | 18-01-2021 |
| | | CO    2020010799 A2 | 18-01-2021 |
| | | CO    2020011713 A2 | 30-06-2021 |
| | | DE 202019005771 U1 | 12-01-2022 |
| | | DE 202019005772 U1 | 16-02-2022 |
| | | DE 202019005795 U1 | 07-03-2022 |
| | | DE 202019005799 U1 | 10-03-2022 |
| | | DE 212019000202 U1 | 08-10-2020 |
| | | DE 212019000204 U1 | 07-10-2020 |
| | | DE 212019000205 U1 | 07-10-2020 |
| | | EP    3759544 A1 | 06-01-2021 |
| | | EP    3759545 A1 | 06-01-2021 |
| | | EP    3759546 A1 | 06-01-2021 |
| | | EP    3759547 A1 | 06-01-2021 |
| | | EP    3759548 A1 | 06-01-2021 |
| | | EP    4020065 A1 | 29-06-2022 |
| | | JP    7154306 B2 | 17-10-2022 |
| | | JP    7155275 B2 | 18-10-2022 |
| | | JP    2021524050 A | 09-09-2021 |
| | | JP    2021524051 A | 09-09-2021 |
| | | JP    2021526229 A | 30-09-2021 |
| | | JP    2021526230 A | 30-09-2021 |
| | | JP    2021526231 A | 30-09-2021 |
| | | JP    2022093412 A | 23-06-2022 |
| | | KR    20200123141 A | 28-10-2020 |
| | | KR    20200124234 A | 02-11-2020 |
| | | KR    20200124235 A | 02-11-2020 |
| | | KR    20200124236 A | 02-11-2020 |
| | | KR    20200124237 A | 02-11-2020 |
| | | KR    20220049606 A | 21-04-2022 |
| | | RU    2757349 C1 | 13-10-2021 |
| | | RU    2757820 C1 | 21-10-2021 |
| | | RU    2765344 C1 | 28-01-2022 |

EPO FORM P0459

For more details about this annex : see Official Journal of the European Patent Office, No. 12/82

page 2 of 3

## ANNEX TO THE EUROPEAN SEARCH REPORT
## ON EUROPEAN PATENT APPLICATION NO.

EP 22 17 5797

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2022

| Patent document cited in search report | | | Publication date | Patent family member(s) | | Publication date |
|---|---|---|---|---|---|---|
| | | | | RU | 2768515 C1 | 24-03-2022 |
| | | | | RU | 2020131393 A | 23-03-2022 |
| | | | | SG | 11202007813S A | 29-09-2020 |
| | | | | SG | 11202008010S A | 29-09-2020 |
| | | | | SG | 11202008011V A | 29-09-2020 |
| | | | | SG | 11202008022S A | 29-09-2020 |
| | | | | SG | 11202008023X A | 29-09-2020 |
| | | | | US | 10948744 B1 | 16-03-2021 |
| | | | | US | 10962804 B1 | 30-03-2021 |
| | | | | US | 2020393702 A1 | 17-12-2020 |
| | | | | US | 2020409180 A1 | 31-12-2020 |
| | | | | US | 2021003864 A1 | 07-01-2021 |
| | | | | US | 2021048689 A1 | 18-02-2021 |
| | | | | US | 2021109378 A1 | 15-04-2021 |
| | | | | US | 2021116720 A1 | 22-04-2021 |
| | | | | US | 2021116722 A1 | 22-04-2021 |
| | | | | US | 2021199990 A1 | 01-07-2021 |
| | | | | US | 2021311330 A1 | 07-10-2021 |
| | | | | US | 2021311331 A1 | 07-10-2021 |
| | | | | US | 2022082858 A1 | 17-03-2022 |
| | | | | US | 2022082859 A1 | 17-03-2022 |
| | | | | WO | 2019166653 A1 | 06-09-2019 |
| | | | | WO | 2019166654 A1 | 06-09-2019 |
| | | | | WO | 2019166655 A1 | 06-09-2019 |
| | | | | WO | 2019166657 A1 | 06-09-2019 |
| | | | | WO | 2019166659 A1 | 06-09-2019 |
| US 9625739 | B2 | | 18-04-2017 | AU | 2015213332 A1 | 10-03-2016 |
| | | | | BR | 102015019798 A2 | 23-02-2016 |
| | | | | CA | 2900362 A1 | 20-02-2016 |
| | | | | CN | 105388628 A | 09-03-2016 |
| | | | | EP | 2988163 A1 | 24-02-2016 |
| | | | | HK | 1219782 A1 | 13-04-2017 |
| | | | | JP | 6698293 B2 | 27-05-2020 |
| | | | | JP | 2016045494 A | 04-04-2016 |
| | | | | KR | 20160022774 A | 02-03-2016 |
| | | | | RU | 2662027 C1 | 23-07-2018 |
| | | | | RU | 2015134858 A | 27-02-2017 |
| | | | | SG | 10201506431Y A | 30-03-2016 |
| | | | | TW | 201617693 A | 16-05-2016 |
| | | | | US | 2016054587 A1 | 25-02-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006034652 A1
- US 20170131567 A1
- US 20200393699 A1
- EP 3561578 A1
- WO 2019166659 A1
- CN 111103701 B
- US 20190227342 A1

- CN 213659117 U
- WO 20068034652 A1
- WO 2019166657 A1
- WO 2010075319 A2
- WO 2018026697 A1
- WO 2019152438 A1
- WO 2020014613 A1


**Non-patent literature cited in the description**

- **B. A. HOLDEN et al.** Global Prevalence of Myopia and High Myopia and Temporal Trends from 2000 through 2050. *Ophthalmology,* 2016, vol. 123, 1036-1042
- **K. S. DUONG.** What's Driving the Myopia Epidemic. 20 January 2022
- Interventions for Controlling Myopia Onset and Progression Report. **C. F. WILDSOET et al.** Invest Ophthalmol Vis Sci. IMI - Interventions Myopia Institute, 2019, vol. 60, M106-M131
- **DONALD O. MUTTI et al.** Myopia The Nature Versus Nurture Debate Goes On. *Investigative Ophthalmology & Visual Science,* May 1996, vol. 37 (6), 952-957
- **T. GROSVENOR ; R. SCOTT.** Comparison of Refractive Components in Youth-Onset and Early Adult-Onset Myopia. *Optom Vis Sci.,* 1991, vol. 68, 204-209
- **M. HO.** Choroidal Thickness Measurement in Myopic Eyes by Enhanced Depth Optical Coherence Tomography. *Ophthalmology,* 2013, vol. 120, 1909-1914
- **S. A. READ.** Choroidal Thickness in Myopic and Nonmyopic Children Assessed With Enhanced Depth Imaging Optical Coherence Tomography. *Invest Vis Sci.,* 2013, vol. 54, 7578-7586
- **J. WALLMAN.** Moving the Retina: Choroidal Modulation of Refractive State. *Vision Res.,* 1995, vol. 35 (1), 37-50
- **C. WILDSOET ; J. WALLMAN.** Choroidal and Scleral Mechanisms of Compensation for Spectacle Lenses in Chicks. *Vision Res.,* 1995, vol. 35 (9), 1175-1194
- **E. C. WOODMAN-PIETERSE.** Regional changes in choroidal thickness associated with accommodation. *Invest Ophthalmol Vis Sci.,* 2015, vol. 56, 6414-6422

- **S. HASEBE.** Effect of Progressive Addition Lenses on Myopia Progression in Japanese Children: A Prospective, Randomized, Double-Masked, Crossover Trial. *Investigative Ophthalmology & Visual Science,* July 2008, vol. 49 (7), 2781-2789
- **H. KANDA et al.** Effect of spectacle lenses designed to reduce relative peripheral hyperopia on myopia progression in Japanese children: a 2-year multicenter randomized controlled trial. *Japanese Journal of Ophthalmology,* https://doi.org/10.1007/s10384-018-0616-3
- **C. S. Y. LAM.** Defocus Incorporated Multiple Segments (DIMS) spectacle lenses slow myopia progression: a 2-year randomised clinical trial. *Br J Ophthalmol.,* 2020, vol. 104, 363-368
- **J. HUANG.** Efficacy Comparison of 16 Interventions for myopia control in children. *Ophthalmology,* 2016, vol. 123, 697-708
- **J. BAO.** One-year myopia control efficacy of spectacle lenses with aspherical lenslets. *Br J Ophthalmol.,* 2021, vol. 0, 1-6
- **W. S. STILES ; B. H. CRAWFORD.** The Luminous Efficiency of Rays Entering the Eye Pupil at Different Points, Proceedings of the Royal Society of London. *Containing Papers of a Biological Character,* 02 March 1933, vol. 112 (778), 428-450
- **S. MARCOS ; S. A. BUMS.** Cone Spacing and Waveguide Properties from Cone Directionality Measurements. *J Opt Soc Am A Opt Image Sci Vis.,* May 1999, vol. 16 (5), 995-1004
- **A. ROORDA ; D. R. WILLIAMS.** Optical fiber properties of individual human cones. *Journal of Vision,* 2002, vol. 2, 404-412
- **J. M. GORRAND.** The directionality of photoreceptors in the human retina. *Bull. Soc. beige Ophtalmol.,* 2006, vol. 302, 215-229

- **D. A. ATCHISON ; D. H. SCOTT.** Contrast sensitivity and the Stiles-Crawford-Effect. *Vision Research,* 2002, vol. 42, 1559-1569